# EUROPÄISCHE PATENTANMELDUNG

(11) **EP 1 674 330 A2**
(43) Veröffentlichungstag der Anmeldung: **28.06.2006**
(21) Anmeldenummer: 05026559.4
(22) Anmeldetag: 06.12.2005
(51) Int. Cl.: B60N 2/20, B60N 2/18, B60N 2/34

(54) **Fahrzeugsitz für ein Nutzfahrzeug**

(30) Priorität: 23.12.2004 DE 102004062088
(71) Anmelder: DaimlerChrysler AG, 70567 Stuttgart (DE)
(72) Erfinder: Kohlbecker, Bernd, 76437 Rastatt (DE); Konzmann, Rainer, 72119 Ammerbuch (DE); Zygan, Andreas, 76316 Malsch (DE)

(57) **Zusammenfassung**

Die Erfindung betrifft einen Fahrzeugsitz (1) für ein Nutzfahrzeug, mit einem Sitzrahmen (21) der ein Sitzkissen (22) und eine neigungsverstellbare Rückenlehne (27) trägt. Um einen bequemen Ruhesitz und zugleich einen sicheren Fahrzeugsitz (1) bereitzustellen, ist vorgesehen, dass der Sitzrahmen (21) um eine parallel zu der Rückenlehne (27) verlaufende Querachse schwenkbar ist, um den Sitz von einer Gebrauchsposition in eine Ruheposition zu schwenken.

## Beschreibung

Die Erfindung betrifft einen Fahrzeugsitz für ein Nutzfahrzeug gemäß dem Oberbegriff von Anspruch 1.

Aus dem deutschen Gebrauchsmuster DE 88 12 434 ist ein Liegesitz für Reisemobile bekannt. Der Liegesitz ist von einer Gebrauchsposition, in der ein Sitzmöbel darstellt in eine Ruheposition überführbar. In dieser Ruheposition bildet der Sitz eine Liegefläche, wobei unterhalb der Liegefläche ein Stauraum angeordnet ist.

Aus der DE 36 28 685 C1 ist ein Fahrzeugsitz bekannt, welcher ein neigungsverstellbares Sitzkissen aufweist. Über das neigungsverstellbare Sitzkissen kann ein Benutzer den Sitz so einstellen, dass er eine bequeme und entspannte Sitzhaltung einnehmen kann.

Für Nutzfahrzeuge stellt sich in der Praxis oftmals die Aufgabe, dass neben einem Fahrersitz, der einen Arbeitsplatz für den Fahrer zum Bedienen des Nutzfahrzeugs darstellt noch ein zusätzlicher Ruheraum für den Fahrer geschaffen werden muss. Dieser Ruheraum soll dem Fahrer in Fahrpausen als Erholungs- und Entspannungsmöglichkeit dienen.

Es ist Aufgabe der vorliegenden Erfindung, einen Fahrzeugsitz für ein Nutzfahrzeug zu schaffen, der einerseits im Fahrbetrieb einen sicheren Sitzplatz darstellt und andererseits für Ruhepausen eine bequeme Ruhemöglichkeit bietet.

Diese Aufgabe wird erfindungsgemäß durch einen Fahrzeugsitz nach den Merkmalen des Patentanspruchs 1 gelöst.

Der Fahrzeugsitz weist einen Sitzrahmen auf, der ein Sitzkissen und eine Rückenlehne trägt und um eine parallel zu der Rückenlehne verlaufende Querachse schwenkbar ist. Dadurch kann der Sitz von einer aufrecht ausgerichteten Gebrauchsposition in eine Ruheposition verbracht werden, in der die Rückenlehne und das Sitzkissen zurückgeschwenkt sind. In der Ruheposition bietet der Sitz eine bequeme Möglichkeit für den Fahrer sich zu entspannen. Zugleich bietet sich bei aufrechter Position des Fahrzeugsitzes, also in der Gebrauchsposition, eine sichere Sitzposition für den Fahrbetrieb an.

In einer Ausführung kann vorgesehen sein, dass der Sitzrahmen eine nach vorn ausklappbare Fußstütze aufweist. Diese Fußstütze kann zum Beispiel am vorderen Ende unterhalb des Sitzkissens angeordnet sein. Sie kann so nach vorne ausgeklappt werden, dass ein auf dem Sitz Sitzender seine Füße bequem auf der Fußstütze abstellen kann. Dadurch bietet der Sitz in seiner Ruheposition eine sehr bequeme Sitzbeziehungsweise Liegestellung an.

Um zudem eine Ablagemöglichkeit für Gepäck in den Fahrzeugsitz zu integrieren, kann vorgesehen sein, dass zwischen dem Sitzkissen und dem Fahrzeugboden ein Staufach angeordnet ist. Dabei kann es sich zum Beispiel um eine Schublade oder um ein durch eine Klappe verschließbares, von der Vorderseite her zugängliches Ablagefach handeln. Die Vorderseite bedeutet dabei die in Fahrtrichtung vorne liegende Seite, wobei der Sitz vorzugsweise so orientiert ist, dass ein auf dem Sitz Sitzender in Fahrtrichtung schaut.

In einer Ausführung kann vorgesehen sein, dass der Sitzrahmen einen Sicherheitsgurt haltert. Dadurch ist gewährleistet, dass der Fahrzeugsitz auch im Fahrbetrieb einen besonders sicheren Sitz darstellt. Der Sitzrahmen kann dabei das Gurtschloss wie auch die Gurtrolle haltern, das bedeutet, dass der Fahrzeugsitz gemäß einem Integralsitz ausgebildet ist und einen in den Sitz integrierten Sicherheitsgurt aufweist. Bei angelegtem Sicherheitsgurt und in Ruheposition verschwenktem Fahrzeugsitz, wird das Sitzkissen in der Neigung so verstellt, dass sich seine Vorderkante gegenüber dem hinteren Bereich des Sitzkissens anhebt. Somit wird verhindert, dass ein auf dem Sitz in Ruheposition Sitzender bei einem Aufprall aus dem Gurt herausrutscht, da sein Becken von dem Sitzkissen des Fahrzeugsitzes abgestützt wird. Somit ist es möglich, dass auch in Ruheposition des Fahrzeugsitzes ein vollwertiger und sicherer Sitzplatz zur Verfügung gestellt wird.

In einer Ausführung kann vorgesehen sein, dass der Fahrzeugsitz als Beifahrersitz in einer Nutzfahrzeugkabine eingebaut ist, wobei vorzugsweise vor dem Fahrersitz die Instrumententafel angeordnet ist und eine Fußablage aufweist. Dadurch kann in Ruheposition des Fahrzeugsitzes ein Sitzender seine Beine auf der Instrumententafel bequem ablegen und somit eine einer Liegeposition ähnliche Ruheposition einnehmen.

Weitere Ausführungsformen der Erfindung sind in den Figuren sowie in der zugehörigen Beschreibung dargestellt.

Dabei zeigen:
- Fig. 1: einen Fahrzeugsitz in Ruheposition,
- Fig. 2: einen Fahrzeugsitz in Gebrauchsposition.

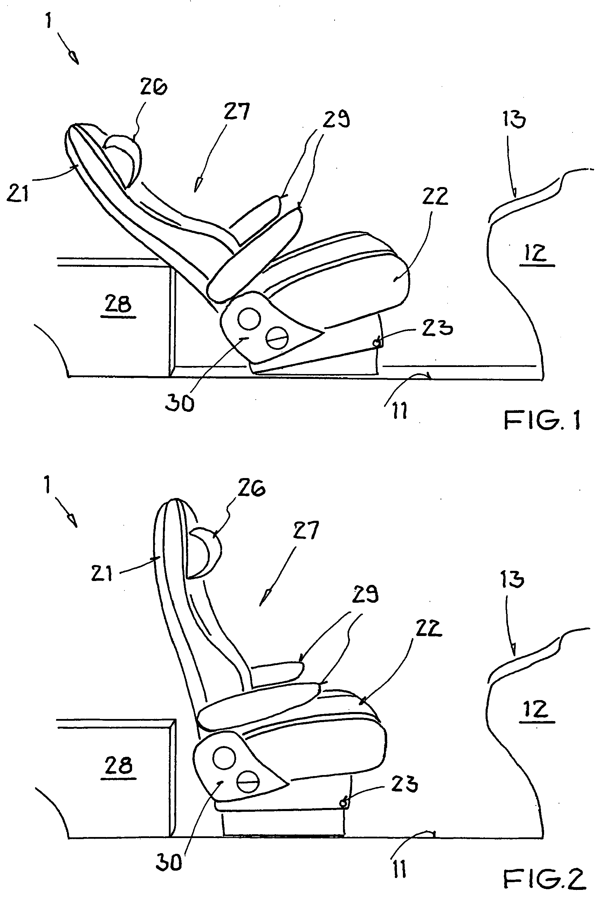

In der Figur 1 ist ein Fahrzeugsitz 1 dargestellt, der in einer Nutzfahrzeugkabine angeordnet ist und fest mit dem Boden 11 der Nutzfahrzeugkabine verbunden ist. In Fahrtrichtung vor dem Fahrzeugsitz 1 ist eine Instrumententafel 12 angeordnet, die an ihrer Oberseite eine Fußablage 13 aufweist.

Hinter dem Fahrzeugsitz 1 ist ein Staufach 28 angeordnet, das zum Ablegen von Gegenständen dienen kann. Der Fahrzeugsitz 1 ist über eine Konsole mit dem Kabinenboden 11 verbunden, wobei die Konsole eine Schwenkachse 23 aufweist, die in etwa parallel zu der Rückenlehne verläuft und im Bereich der Vorderkante eines Sitzkissens 22 angeordnet ist. Die Oberseite der Konsole ist mit einem Sitzrahmen 21 verbunden, der das Sitzkissen 22 und die Rückenlehne 27 trägt. Die Rückenlehne 27 ist über einen Beschlag 30 in ihrer Neigung relativ zum Sitzkissen verstellbar, so dass der Fahrzeugsitz eine individuell einstellbare Sitzposition aufweist.

Zudem ist der Fahrzeugsitz 1 in seiner Gesamtheit um die quer zu der Sitzlängsrichtung verlaufende Schwenkachse 23 schwenkbar, so dass er entweder in der in Figur 1 dargestellten Ruheposition oder in der in Figur 2 dargestellten Gebrauchsposition angeordnet sein kann. In der Gebrauchsposition ist die Rückenlehne 27 weitestgehend aufrecht, das heißt im Wesentlichen senkrecht zu dem Kabinenboden 11 verlaufend, angeordnet. In der Ruheposition, die in Figur 1 dargestellt ist, ist die Rückenlehne 27 nach hinten zu dem Staufach 28 hin verschwenkt, so dass sich eine angenäherte Liegeposition ergibt.

An der Rückenlehne 27 ist zur Erhöhung des Sitzbeziehungsweise Liegekomforts eine integrierte Kopfstütze 26 angeordnet. Links und rechts an der Rückenlehne 27 sind zwei Armlehnen 29 angeordnet, die den Komfort für den auf dem Fahrzeugsitz 1 Sitzenden weiter erhöhen.

Eine Verwendung des erfindungsgemäßen Fahrzeugsitzes 1 kann in schweren oder in leichten Nutzfahrzeugen erfolgen, wobei insbesondere ein vollwertiger Beifahrersitz und zugleich ein bequemer Ruhesitz zur Verfügung gestellt wird. Eine Verwendung des Fahrzeugsitzes 1 kann zudem auch in Omnibussen oder Flugzeugen für den Personentransport erfolgen.

## Patentansprüche

1. Fahrzeugsitz für ein Nutzfahrzeug,
mit einem Sitzrahmen(21), der ein Sitzkissen (22) und eine neigungsverstellbare Rückenlehne (27) trägt und über in Sitzlängsrichtung verstellbare Sitzschienen mit einem Fahrzeugboden (11) verbunden ist,
**dadurch gekennzeichnet,**
**dass** der Sitzrahmen (21) um eine parallel zu der Rückenlehne verlaufende Querachse (23) schwenkbar ist, um den Sitz von einer Gebrauchsposition in eine Ruheposition zu schwenken.

2. Fahrzeugsitz nach Anspruch 1,
**dadurch gekennzeichnet,**
**dass** der Sitzrahmen (21) eine nach vorne ausklappbare Fußstütze aufweist.

3. Fahrzeugsitz nach Anspruch 1 oder 2,
**dadurch gekennzeichnet,**
**dass** zwischen dem Sitzkissen (22) und dem Fahrzeugboden (11) ein Staufach angeordnet ist.

4. Fahrzeugsitz nach einem der Ansprüche 1 bis 3,
**dadurch gekennzeichnet,**
**dass** der Sitzrahmen (21) einen Sicherheitsgurt haltert.

5. Fahrerkabine eines Nutzfahrzeugs,
**dadurch gekennzeichnet,**
**dass** ein Beifahrersitz als Fahrzeugsitz (1) nach einem der Ansprüche 1 bis 5 ausgebildet ist.

6. Fahrerkabine nach Anspruch 5,
**dadurch gekennzeichnet,**
**dass** in Sitzrichtung vor dem Beifahrersitz eine Instrumententafel (12) angeordnet ist, die eine Fußauflage (13) aufweist.
